# EUROPEAN PATENT APPLICATION

(11) **EP 4 803 451 A1**
(43) Date of publication of application: **09.09.2026**
(21) Application number: 26154931.5
(22) Date of filing: 29.01.2026
(51) Int. Cl.: B65G 25/08, B65G 47/14

(54) **SETTABLE SAWTOOTH CONVEYOR**

(30) Priority: 04.03.2025 NL 4000014
(71) Applicant: Niverplast Holding B.V., 7442 PD Nijverdal (NL)
(72) Inventor: NIEUWENHUIS, Gerrit Jan, NIJVERDAL (NL); BOERRIGTER, Chiel Bernardus Johannes, NIJVERDAL (NL)
(74) Representative: Algemeen Octrooi- en Merkenbureau B.V.

(57) **Abstract**

Conveying device (1) configured for singulating and gradually conveying elongate articles (3) in a conveying direction (T), wherein the elongate articles are oriented in the transverse direction (D) transversely to the conveying direction (T), the conveying device (1) comprising an article supporting member (5) having article supporting elements (7) and an article lifting member (9) having article lifting elements (11), both provided on their upwardly facing side with sawtooth profiles (13-I, 13-i), wherein the article lifting member (9) is configured to carry out a movement (R) in relation to the article supporting member (5) in order to gradually displace, in the conveying direction (T), a respective specimen of the elongate articles (3) in the conveying direction (T), and wherein the article lifting member (9) is provided with an adjusting device (25), by means of which the conveying device (1) can be adapted to a diameter, a width (S1) and/or a height of the elongate articles (3).

## Description

The present invention relates, according to a first aspect, to a conveying device configured for singulating and gradually conveying elongate articles in a conveying direction, wherein the elongate articles are oriented in the transverse direction transversely to the conveying direction.

The invention also relates, according to a second aspect, to a method for singulating and gradually conveying, by means of a conveying device, elongate articles in a conveying direction, wherein the elongate articles are oriented transversely to the conveying direction.

US 4,658,954 describes a conveying device for gradually conveying elongate articles in the conveying direction. The articles have a cylindrical surface or surfaces so that the articles can roll in the conveying direction. The conveying device is provided with an article supporting member having two parallel elongate article supporting elements extending in the conveying direction; and an article lifting member comprising two parallel elongate article lifting elements extending in the conveying direction, wherein the article supporting elements and the article lifting elements extend parallel to each other in the conveying direction, and are provided on their upwardly facing side with profiles which are substantially identical and have upwardly protruding peaks between which placement locations or stations are formed, wherein the peaks and the placement locations of the article supporting elements and the article lifting elements are aligned in rows in the transverse direction for receiving and supporting and displacing the elongate articles. The placement locations of the article supporting elements and the article lifting elements are formed by a rolling lifting surface which descends downwards in the conveying direction from a peak, and by a supporting surface which rises upwards in the conveying direction from the rolling lifting surface to a subsequent peak.

The article lifting member is configured to carry out a movement in the height direction in relation to the article supporting member in order to gradually displace the elongate articles, which are oriented in the transverse direction, in the conveying direction from one row of placement locations in the transverse direction in the article supporting elements to a subsequent row, in the conveying direction, of placement locations in the transverse direction in the article supporting elements.

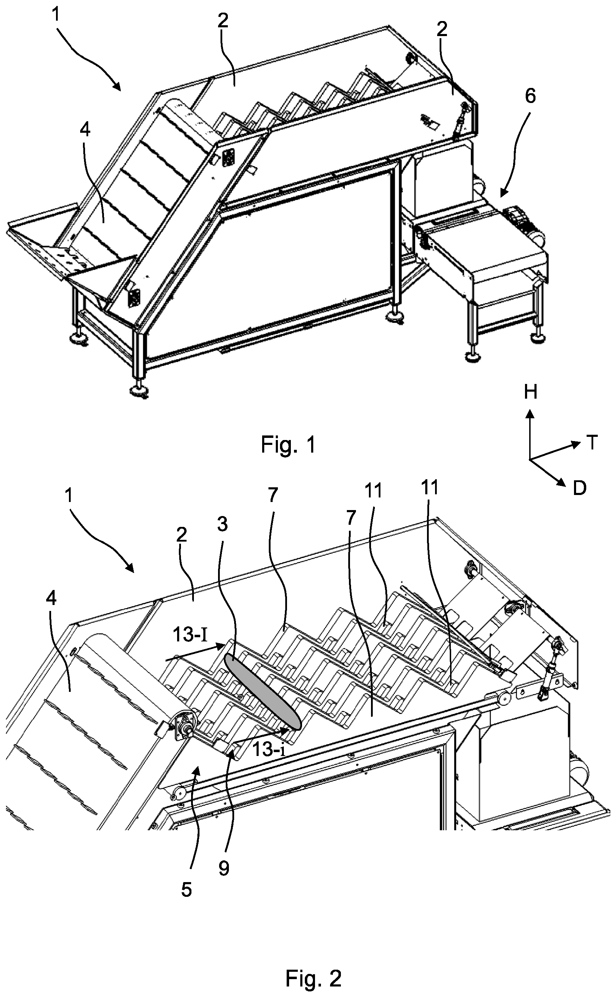

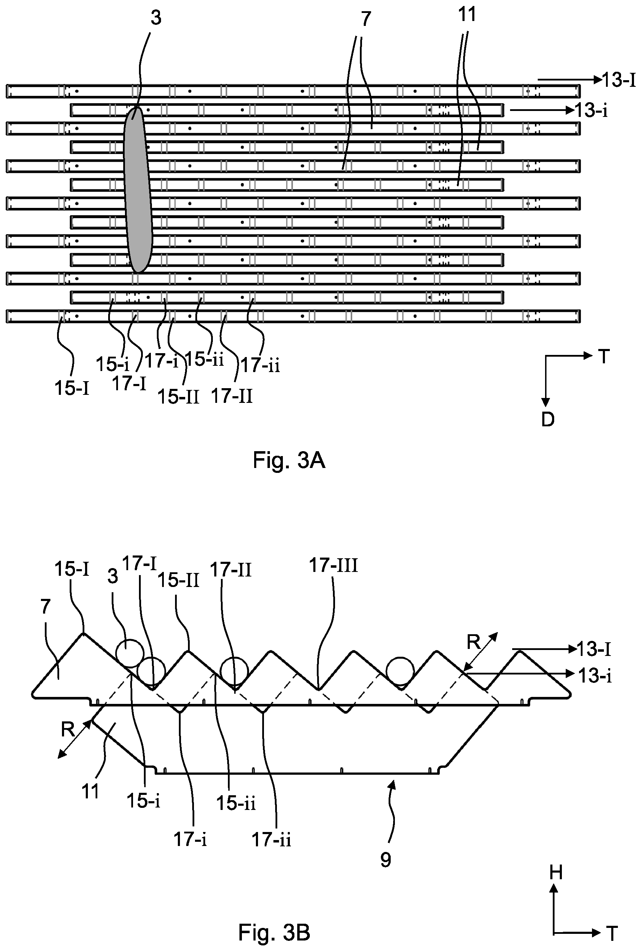

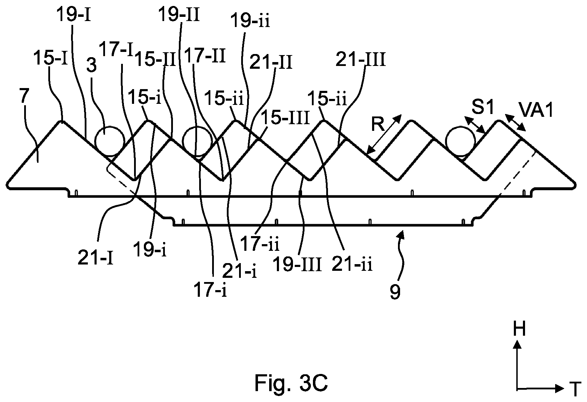

The conveying device in US 4,658,954 has the disadvantage that placement locations or stations are dimensioned for a limited range of the diameter, the width and/or the height of the elongate articles, as a result of which singulating is difficult for different diameters of the elongate articles and use has to be made of latches, as shown in Figures 2 and 3, in order to prevent simultaneous displacement of two or more elongate articles to a subsequent row, in the conveying direction, of placement locations.

The present invention therefore aims to provide a conveying device configured for singulating and gradually conveying elongate articles in a conveying direction, wherein the elongate articles are oriented in the transverse direction transversely to the conveying direction, which conveying device satisfactorily and reliably singulates and gradually displaces elongate articles without the use of additional locking elements, and wherein the conveying device can be easily and reliably set and adapted to the diameter, the width and/or the height of the elongate articles.

The conveying device configured for singulating and gradually conveying elongate articles in a conveying direction, wherein the elongate articles are oriented in the transverse direction transversely to the conveying direction, comprises, according to a first aspect of the invention:
an article supporting member comprising parallel elongate article supporting elements which are placed at a distance from each other in the transverse direction and extend in the conveying direction;
an article lifting member comprising parallel elongate article lifting elements which are placed at a distance from each other in the transverse direction and extend in the conveying direction,
wherein the article supporting elements and the article lifting elements extend parallel to each other in the conveying direction, wherein the article supporting elements and the article lifting elements are provided on their upwardly facing side with sawtooth profiles which are substantially identical and have upwardly protruding peaks between which placement locations are formed,
wherein the peaks and the placement locations of the article supporting elements are aligned in rows in the transverse direction for receiving and supporting a respective specimen of the elongate articles in the placement locations, and
wherein the peaks and the placement locations of the article lifting elements are aligned in rows in the transverse direction for displacing the elongate articles,
wherein the placement locations of the article supporting elements and the article lifting elements are formed by a rolling lifting surface which descends downwards in the conveying direction from a peak, and by a supporting surface which rises upwards in the conveying direction from the rolling lifting surface to a subsequent peak;
wherein the article lifting member is configured to carry out, in relation to the article supporting member, a movement which is substantially parallel to the supporting surfaces and/or extends substantially transversely to the rolling lifting surfaces and/or the placement locations in order to gradually displace a respective specimen of the elongate articles, which are oriented in the transverse direction, in the conveying direction from one row of placement locations in the transverse direction in the article supporting elements to a subsequent row, in the conveying direction, of placement locations in the transverse direction in the article supporting elements.

Moving the article lifting member substantially parallel to the supporting surfaces of the article supporting elements makes it possible for the elongate articles to easily be gradually displaced from one row of placement locations in the transverse direction in the article supporting elements to a subsequent row, in the conveying direction, of placement locations in the transverse direction in the article supporting elements.

Preferably, the rolling lifting surfaces and the supporting surfaces are each a substantially non-curved surface, which are at an angle to each other. This measure ensures more effective conveyance and displacement of the elongate articles over the peaks of the article supporting elements to the placement locations positioned between said peaks.

In particular, the movement of the article lifting member extends from at least one lower lifting position, in which the rolling lifting surfaces of an article lifting element are level with the rolling lifting surfaces of an adjacent article supporting element, to at least one upper lifting position, in which the rolling lifting surfaces of the article lifting element are level with the subsequent rolling lifting surfaces, in the conveying direction, of the adjacent article supporting element. This makes it better possible to displace one elongate article each time from one placement location to a subsequent placement location in the conveying direction, such that one elongate article leaves the conveying device each time.

The article supporting elements and the article lifting elements preferably extend in the conveying direction alternately next to each other in the transverse direction, such that the elongate articles are uniformly and optimally supported and gradually displaced without the elongate article being damaged or tilted.

Preferably, the article supporting elements are provided on the outer sides of the article lifting elements in the transverse direction, as a result of which the elongate articles are always supported at the ends near the walls of the conveying device that extend in the conveying direction and the risk of the elongate articles being tilted and damaged is reduced.

In particular, in the conveying direction, the article supporting elements are provided with an additional row of peaks upstream of the first row of peaks of the article lifting elements. This allows the elongate articles to be fed to the conveying device easily and with a reduced risk of damage.

In an alternative embodiment, the article lifting member is provided with an adjusting device, by means of which the conveying device can be adapted to a diameter, a width and/or a height of the elongate articles.

Preferably, the adjusting device is configured to adjust the article lifting member in relation to the article supporting member in a direction substantially parallel to the rolling lifting surfaces of an article supporting element. This makes it possible for the conveying device to be easily and reliably adapted to a changed diameter, width and/or height of the elongate articles, such that each time as far as possible one elongate article is displaced from one placement location to a subsequent placement location, and each time one elongate article leaves the conveying device.

In a particular embodiment, the adjusting device comprises a spindle which can be used to adjust the article lifting member in relation to the article supporting member. The adjusting device may comprise a spindle but may also be formed by another known adjusting mechanism.

Preferably, an adjustment distance extends from at least one lower adjustment position, in which the supporting surfaces of an article lifting element are level with the supporting surfaces of an adjacent article supporting element, to at least one upper adjustment position, in which the supporting surfaces of the article lifting member are level with a preceding supporting surface, in the conveying direction, of the adjacent article supporting elements.

In particular, the adjustment distance corresponds to the diameter, the width and/or the height of the elongate articles.

These measures make it possible, in principle, for the conveying device to be used to process and singulate elongate articles with a very small diameter, width and/or height and also to process and singulate elongate articles with a very large diameter, width and/or height, in principle up to diameters, widths and/or heights equal to the adjustment distance.

The method according to a second aspect of invention for singulating and gradually conveying, by means of a conveying device according to a first aspect of the invention, elongate articles in a conveying direction, wherein the elongate articles are oriented in the transverse direction transversely to the conveying direction, and wherein the conveying device comprises:
an article supporting member comprising parallel elongate article supporting elements which are placed at a distance from each other in the transverse direction and extend in the conveying direction;
an article lifting member comprising parallel elongate article lifting elements which are placed at a distance from each other in the transverse direction and extend in the conveying direction,
wherein the article supporting elements and the article lifting elements extend parallel to each other in the conveying direction, wherein the article supporting elements and the article lifting elements are provided on their upwardly facing side with sawtooth profiles which are substantially identical and have upwardly protruding peaks between which placement locations are formed, wherein the peaks and the placement locations of the article supporting elements are aligned in rows in the transverse direction for receiving and supporting a respective specimen of the elongate articles, and
wherein the peaks and the placement locations of the article lifting elements are aligned in rows in the transverse direction for displacing the elongate articles,
wherein the placement locations of the article supporting elements and the article lifting elements are formed by a rolling lifting surface which descends downwards in the conveying direction from a peak, and by a supporting surface which rises upwards in the conveying direction from the rolling lifting surface to a subsequent peak;
wherein the article lifting member is configured to carry out, in relation to the article supporting member, a movement which is substantially parallel to the supporting surfaces and/or extends substantially transversely to the rolling lifting surfaces in order to gradually displace a respective specimen of the elongate articles, which are oriented in the transverse direction, in the conveying direction from one row of placement locations in the transverse direction in the article supporting elements to a subsequent row, in the conveying direction, of placement locations in the transverse direction in the article supporting elements;
comprises the following steps:
carrying out a movement which is substantially parallel to the supporting surfaces and/or extends substantially transversely to the rolling lifting surfaces in order to gradually displace a respective specimen of the elongate articles, which are oriented in the transverse direction, in the conveying direction from one row of placement locations in the transverse direction in the article supporting elements to a subsequent row, in the conveying direction, of placement locations in the transverse direction in the article supporting elements.

This method makes it possible for the elongate articles to easily be gradually displaced from one row of placement locations in the transverse direction in the article supporting elements to a subsequent row, in the conveying direction, of placement locations in the transverse direction in the article supporting elements.

In particular, the method further comprises the step of:
adjusting the article lifting member by an adjustment distance in relation to the article supporting device in a direction parallel to the rolling lifting surfaces of an article supporting element.

In particular, the method further comprises the step of:
setting an adjustment distance which corresponds to the diameter, the width and/or the height of the elongate articles.

This makes it possible for the conveying device to be easily and reliably adapted to a changed diameter, width and/or height of the elongate articles, such that each time as far as possible, per movement of the article lifting member, one elongate article is displaced from one placement location to a subsequent placement location in the conveying direction, and each time one elongate article will leave the conveying device per movement of the article lifting member. Furthermore, it is possible, in principle, to process and singulate elongate articles with a very small diameter, width and/or height and also to process and singulate elongate articles with a very large diameter, width and/or height satisfactorily and reliably, in principle up to diameters, widths and/or heights equal to the adjustment distance.

These and other aspects of the present invention will be described in more detail with reference to the attached figures. In these figures, the same reference numerals always refer to the same or similar components and parts.
Figure 1 shows a perspective view of a conveying device for singulating and gradually conveying elongate articles,
Figure 2 shows the article supporting member and the article lifting member of Figure 1 in more detail,
Figure 3A shows a top view of the article supporting elements and the article lifting elements of Figure 2,
Figure 3B shows a schematic view of an article supporting element and an article lifting element in a lower lifting position,
Figure 3C shows a schematic view of Figure 3B with the article lifting element in an upper lifting position,
Figure 4A shows the article lifting element in the lower lifting position of Figure 3A for an article with a small thickness,
Figure 4B shows the article lifting element in the upper lifting position of Figure 3C for an article with a small thickness.

Figures 1 and 2 show a conveying device 1 configured for singulating and gradually conveying elongate articles 3 in the conveying direction T, wherein the elongate articles 3 are oriented in the transverse direction D transversely to the conveying direction T. The height direction H extends perpendicularly to the transverse direction D and the conveying direction T.

The conveying device 1 comprises an article supporting member 5 which comprises parallel elongate article supporting elements 7 which are placed at a distance from each other in the transverse direction D and extend in the conveying direction T. The conveying device 1 further comprises an article lifting member 9 which comprises parallel elongate article lifting elements 11 which are placed at a distance from each other in the transverse direction D and extend in the conveying direction T. The article supporting elements 7 and the article lifting elements 11 are provided on their upwardly facing side with sawtooth profiles 13-I, 13-i which are substantially identical. The conveying device 1 is provided with upright walls or edges 2 between which the elongate articles 3 are fed, for example by means of a conveyor belt 4. In the conveying direction T, at the end, discharge means 6 are provided for the discharging and possibly onward feeding of the elongate articles 3. In the embodiment shown, the article supporting elements 7 and the article lifting elements 11 are alternately mounted. It is also possible to mount the article supporting elements 7 and the article lifting elements 11 in a different configuration.

Figure 3A shows a top view and Figures 3B and 3C show side views of the article supporting elements 7 and the article lifting elements 11 which extend parallel to each other in the conveying direction T. In the exemplary embodiment shown, the article supporting elements 7 and the article lifting elements 11 extend alternately parallel to each other in the conveying direction T. The article supporting elements 7 and the article lifting elements 11 are provided on their upwardly facing side with sawtooth profiles 13-I, 13-i which are substantially identical and have upwardly protruding peaks 15-I, 15-II, 15-i, 15-ii between which placement locations 17-I, 17-II, 17-i, 17-ii are formed, wherein the peaks 15-I, 15-II and the placement locations 17-I, 17-II of the article supporting elements 7 are aligned in rows in the transverse direction D for receiving and supporting a respective specimen of the elongate articles 3 in the placement locations 17-I, 17-II. The peaks 15-i, 15-ii and the placement locations 17-i, 17-ii of the article lifting elements 11 are aligned in rows in the transverse direction D for displacing the elongate articles 3 over peaks 15-I, 15-II, which are aligned in rows in the transverse direction D, of the article supporting elements 7.

The placement locations 17-I, 17-II, 17-i, 17-ii of the article supporting elements 7 and the article lifting elements 11 are formed by a rolling lifting surface 19-I, 19-II, 19-i, 19-ii which descends downwards in the conveying direction T from a peak 15-I, 15-II, 15-i, 15-ii, and by a supporting surface 21-I, 21-II, 21-i, 21-ii which rises upwards in the conveying direction T from the rolling lifting surface 19-I, 19-11, 19-i, 19-ii to a subsequent peak 15-11, 15-111, 15-ii, 15-iii. The article lifting member 9 is configured to carry out, in relation to the article supporting member 5, a movement R which is substantially parallel to the supporting surfaces 21-I, 21-II and/or extends substantially transversely to the rolling lifting surfaces 19-I, 19-II in order to gradually displace a respective specimen of the elongate articles 3, which are oriented in the transverse direction D, in the conveying direction T from one row of placement locations 17-I, 17-II in the transverse direction D in the article supporting elements 7 to a subsequent row, in the conveying direction T, of placement locations 17-II, 17-III in the transverse direction D in the article supporting elements 7. Figure 3B shows a lower lifting position of the movement R of the article lifting element 11 and Figure 3C shows an upper lifting position of the movement R of the article lifting element 11.

In the exemplary embodiment shown, the rolling lifting surfaces 19-I, 19-II, 19-i, 19-ii and the supporting surfaces 21-I, 21-II, 21-i, 21-ii are each a substantially non-curved surface, which are at an angle to each other. In this way, the elongate articles 3 are more effectively displaced over the peaks 15-I, 15-II of the article supporting elements 7 to the placement locations 17-I, 17-II, 17-III, which are positioned between the peaks, of the article supporting elements 7. If desired, the rolling lifting surfaces 19-I, 19-II, 19-i, 19-ii and the supporting surfaces 21-I, 21-II, 21-i, 21-ii may be provided with a differently shaped surface.

The movement R of the article lifting member 9 extends from at least one lower lifting position, in which the rolling lifting surfaces 19-i, 19-ii of an article lifting element 11 are level with the rolling lifting surfaces 19-I, 19-II of an adjacent article supporting element 7, to at least one upper lifting position, in which the rolling lifting surfaces 19-i, 19-ii of the article lifting element 11 are level with the subsequent rolling lifting surfaces 19-II, 19-III, in the conveying direction T, of the adjacent article supporting element 7. Thus, the article lifting elements 11 are capable of lifting, by a movement R, an elongate article 3 on a row of placement locations 17-I, 17-II on the rolling lifting surfaces 19-i, 19-ii until the rolling lifting surfaces 19-i, 19-ii of the article lifting elements 11 lie in the extension of the rolling lifting surfaces 19-II, 19-111 of a subsequent row of placement locations 17-II, 17-III of an adjacent article supporting element 7 such that the elongate article 3 slides and/or rolls from the rolling lifting surface 19-i, 19-ii of the article lifting elements 11 over the rolling lifting surfaces 19-II, 19-111 of the adjacent article supporting elements 7 to the subsequent row of placement locations 17-II, 17-III in the transverse direction D in the article supporting elements 7.

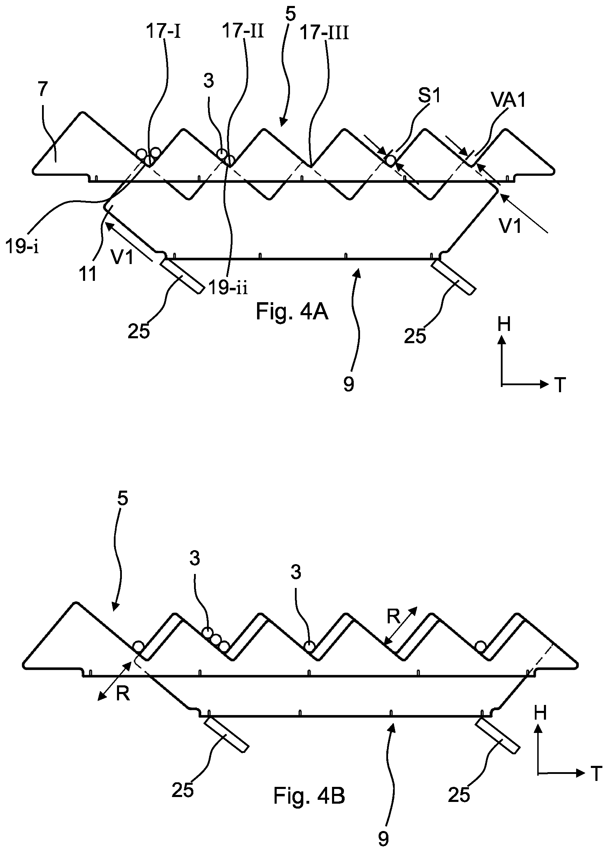

Figures 4A, 4B show an advantageous embodiment in which the article lifting member 9 is provided with an adjusting device 25, by means of which the conveying device can be set and adapted to a diameter, a width S1 and/or a height of the elongate articles. The adjusting device 25 is schematically indicated in Figure 4A and may comprise a spindle but may also be formed by another known adjusting mechanism. The adjusting device 25 is configured to adjust the article lifting member 9 in relation to the article supporting member 5 in a direction V1 substantially parallel to the rolling lifting surfaces 19-I, 19-II of an article supporting element 7. Figure 4A shows a lower lifting position of the movement R of the article lifting element 11 and Figure 4B shows an upper lifting position of the movement R of the article lifting element 11.

Figure 3C shows that the adjustment distance VA1 in the direction V1 extends from at least one lower adjustment position, in which the supporting surfaces 21-i, 21-ii of an article lifting element 11 are level with the supporting surfaces 21-11, 21-III of an adjacent article supporting element 7, to at least one upper adjustment position, in which the supporting surfaces 21-i, 21-ii of the article lifting member 11 are level with a preceding supporting surface 21-I, 21-II, in the conveying direction T, of the adjacent article supporting elements 7. Preferably, the adjustment distance VA1 corresponds to the diameter, the width S1 and/or the height of the elongate articles 3. If the rolling lifting surfaces 19-i, 19-ii of the article lifting elements 11 are at least greater than the diameter, the width S1 and/or the height of the elongate articles 3, the rolling lifting surfaces 19-i, 19-ii will gradually displace exactly one article 3 from a group of two or more articles from one row of placement locations 17-I, 17-II in the transverse direction D in the article supporting elements 7 to a subsequent row, in the conveying direction T, of placement locations 17-11, 17-III in the transverse direction D in the article supporting elements 7. In Figure 4A, compared with Figure 3C, an elongate article 3 with a smaller width S1 is singulated and conveyed, such that the adjustment distance VA1 is also chosen to be smaller and the rolling lifting surfaces 19-i, 19-ii have a smaller height in the direction V1, with the result that each time only one elongate article 3 is lifted and displaced to a subsequent row of placement locations 17-II, 17-III in the transverse direction D.

Figure 4B shows the situation in which the article lifting member 9 set for elongate articles 3 with a small diameter, width S1 and/or height is in an upper lifting position, as a result of which, compared with the situation in Figure 4A in which the article lifting member 9 is in an upper lifting position, a number of elongate articles 3 are displaced to a subsequent placement location. By having the adjustment distance VA1 correspond to the width S1 of the elongate articles 3, each time preferably one elongate article 3 per placement location will be displaced in the conveying direction T.

## Claims

1. Conveying device (1) configured for singulating and gradually conveying elongate articles (3) in a conveying direction (T), wherein the elongate articles are oriented in the transverse direction (D) transversely to the conveying direction (T), the conveying device (1) comprising:
an article supporting member (5) comprising parallel elongate article supporting elements (7) which are placed at a distance from each other in the transverse direction (D) and extend in the conveying direction (T);
an article lifting member (9) comprising parallel elongate article lifting elements (11) which are placed at a distance from each other in the transverse direction (D) and extend in the conveying direction (T),
wherein the article supporting elements (7) and the article lifting elements (11) extend parallel to each other in the conveying direction (T), wherein the article supporting elements (7) and the article lifting elements (11) are provided on their upwardly facing side with sawtooth profiles (13-I, 13-i) which are substantially identical and have upwardly protruding peaks (15-I, 15-II, 15-i, 15-ii) between which placement locations (17-I, 17-II, 17-i, 17-ii) are formed, wherein the peaks (15-I, 15-II) and the placement locations (17-I, 17-II) of the article supporting elements (7) are aligned in rows in the transverse direction (D) for receiving and supporting a respective specimen of the elongate articles (3) in the placement locations (17-I, 17-II), and
wherein the peaks (15-i, 15-ii) and the placement locations (17-I, 17-ii) of the article lifting elements (11) are aligned in rows in the transverse direction (D) for displacing the elongate articles (3),
wherein the placement locations (17-I, 17-II, 17-i, 17-ii) of the article supporting elements (7) and the article lifting elements (11) are formed by a rolling lifting surface (19-I, 19-II, 19-i, 19-ii) which descends downwards in the conveying direction (T) from a peak (15-1, 15-11, 15-i, 15-ii), and by a supporting surface (21-1, 21-11, 21-i, 21-ii) which rises upwards in the conveying direction (T) from the rolling lifting surface (19-I, 19-II, 19-i, 19-ii) to a subsequent peak (15-II, 15-III, 15-ii, 15-iii);
**characterized in that**
the article lifting member (9) is configured to carry out, in relation to the article supporting member (5), a movement (R) which is substantially parallel to the supporting surfaces (21-I, 21-II) and/or extends substantially transversely to the rolling lifting surfaces (19-I, 19-II) in order to gradually displace a respective specimen of the elongate articles (3), which are oriented in the transverse direction (D), in the conveying direction (T) from one row of placement locations (17-I, 17-II) in the transverse direction (D) in the article supporting elements (7) to a subsequent row, in the conveying direction (T), of placement locations (17-II, 17-III) in the transverse direction (D) in the article supporting elements (7).

2. Conveying device (1) according to Claim 1, wherein the rolling lifting surfaces (19-I, 19-II, 19-i, 19-ii) and the supporting surfaces (21-I, 21-II, 21-i, 21-ii) are each a substantially non-curved surface, which are at an angle to each other.

3. Conveying device (1) according to Claim 1 or 2, wherein the movement (R) of the article lifting member (9) extends from at least one lower lifting position, in which the rolling lifting surfaces (19-i, 19-ii) of an article lifting element (11) are level with the rolling lifting surfaces (19-I, 19-II) of an adjacent article supporting element (7), to at least one upper lifting position, in which the rolling lifting surfaces (19-i, 19-ii) of the article lifting element (11) are level with the subsequent rolling lifting surfaces (19-II, 19-III), in the conveying direction (T), of the adjacent article supporting element (7) .

4. Conveying device (1) according to any of Claims 1-3, wherein the article supporting elements (7) and the article lifting elements (11) extend in the conveying direction (T) alternately next to each other in the transverse direction (D).

5. Conveying device (1) according to any of Claims 1-4, wherein the article supporting elements (7) are provided on the outer sides of the article lifting elements (11) in the transverse direction (D).

6. Conveying device (1) according to any of Claims 1-5, wherein, in the conveying direction (T), the article supporting elements (7) are provided with an additional row of peaks (15-I) upstream of the first row of peaks (15-i) of the article lifting elements (11).

7. Conveying device (1) according to any of Claims 1-6, wherein the article lifting member (9) is provided with an adjusting device (25), by means of which the conveying device (1) can be adapted to a diameter, a width (S1) and/or a height of the elongate articles (3).

8. Conveying device (1) according to Claim 7, wherein the adjusting device (25) is configured to adjust the article lifting member (9) in relation to the article supporting member (5) in a direction (V1) substantially parallel to the rolling lifting surfaces (19-I, 19-II) of an article supporting element (7).

9. Conveying device (1) according to Claims 7-8, wherein the adjusting device (25) comprises a spindle.

10. Conveying device (1) according to either of Claims 8-9, wherein an adjustment distance (VA1) extends from at least one lower adjustment position, in which the supporting surfaces (21-i, 21-ii) of an article lifting element (11) are level with the supporting surfaces (21-II, 21-III) of an adjacent article supporting element (7), to at least one upper adjustment position, in which the supporting surfaces (21-i, 21-ii) of the article lifting member (11) are level with a preceding supporting surface (21-I, 21-II), in the conveying direction (T), of the adjacent article supporting elements (7).

11. Conveying device (1) according to Claim 8, wherein the adjustment distance (VA1) corresponds to the diameter, the width (S1) and/or the height of the elongate articles (3).

12. Method for singulating and gradually conveying, by means of a conveying device, elongate articles (3) in a conveying direction (T), wherein the elongate articles are oriented in the transverse direction (D) transversely to the conveying direction (T), the conveying device (1) comprising:
an article supporting member (5) comprising parallel elongate article supporting elements (7) which are placed at a distance from each other in the transverse direction (D) and extend in the conveying direction (T);
an article lifting member (9) comprising parallel elongate article lifting elements (11) which are placed at a distance from each other in the transverse direction (D) and extend in the conveying direction (T),
wherein the article supporting elements (7) and the article lifting elements (11) extend parallel to each other in the conveying direction (T), wherein the article supporting elements (7) and the article lifting elements (11) are provided on their upwardly facing side with sawtooth profiles (13-I, 13-i) which are substantially identical and have upwardly protruding peaks (15-I, 15-II, 15-i, 15-ii) between which placement locations (17-I, 17-II, 17-i, 17-ii) are formed, wherein the peaks (15-I, 15-II) and the placement locations (17-I, 17-II) of the article supporting elements (7) are aligned in rows in the transverse direction (D) for receiving and supporting a respective specimen of the elongate articles (3), and
wherein the peaks (15-i, 15-ii) and the placement locations (17-i, 17-ii) of the article lifting elements (11) are aligned in rows in the transverse direction (D) for displacing the elongate articles (3),
wherein the placement locations (17-I, 17-II, 17-i, 17-ii) of the article supporting elements (7) and the article lifting elements (11) are formed by a rolling lifting surface (19-I, 19-II, 19-i, 19-ii) which descends downwards in the conveying direction (T) from a peak (15-I, 15-II, 15-i, 15-ii), and by a supporting surface (21-1, 21-II, 21-i, 21-ii) which rises upwards in the conveying direction (T) from the rolling lifting surface (19-I, 19-II, 19-i, 19-ii) to a subsequent peak (15-II, 15-III, 15-ii, 15-iii);
wherein the article lifting member (9) is configured to carry out, in relation to the article supporting member (5), a movement (R) which is substantially parallel to the supporting surfaces (21-I, 21-II) and/or extends substantially transversely to the rolling lifting surfaces (19-I, 19-II) in order to gradually displace a respective specimen of the elongate articles (3), which are oriented in the transverse direction (D), in the conveying direction (T) from one row of placement locations (17-I, 17-11) in the transverse direction (D) in the article supporting elements (7) to a subsequent row, in the conveying direction (T), of placement locations (17-II, 17-III) in the transverse direction (D) in the article supporting elements (7);
**characterized in that** the method comprises the following steps:
carrying out a movement (R) which is substantially parallel to the supporting surfaces (21-I, 21-II) and/or extends substantially transversely to the rolling lifting surfaces (19-I, 19-II) in order to gradually displace a respective specimen of the elongate articles (3), which are oriented in the transverse direction (D), in the conveying direction (T) from one row of placement locations (17-I, 17-II) in the transverse direction (D) in the article supporting elements (7) to a subsequent row, in the conveying direction (T), of placement locations (17-II, 17-III) in the transverse direction (D) in the article supporting elements (7).

13. Method according to Claim 11, wherein the method further comprises the step of:
adjusting the article lifting member (9) by an adjustment distance (VA1) in relation to the article supporting device (5) in a direction parallel to the rolling lifting surfaces (19-I, 19-II) of an article supporting element (7).

14. Method according to Claim 12, wherein the method further comprises the step of:
setting an adjustment distance (VA1) which corresponds to the diameter, the width (S1) and/or the height of the elongate articles (3).
